# EUROPÄISCHE PATENTANMELDUNG

(11) **EP 1 783 876 A2**
(43) Veröffentlichungstag der Anmeldung: **09.05.2007**
(21) Anmeldenummer: 06405452.1
(22) Anmeldetag: 24.10.2006
(51) Int. Cl.: H02G 15/04, H02G 3/06

(54) **Kabelverschraubung für ein abgeschirmtes Kabel**

(30) Priorität: 04.11.2005 CH 17662005
(71) Anmelder: AGRO AG, CH-5502 Hunzenschwil (CH)
(72) Erfinder: Lehmanm, Christoph, 5634 Merenschwand (CH); Meier, Niklaus, 5037 Muhen (CH); Pala, Mehmet, 8107 Buchs (CH)
(74) Vertreter: Groner, Manfred

(57) **Zusammenfassung**

Die Kabelverschraubung weist wenigstens einen Unterteil (3,34), einen in diesem gelagerten Dichtteil (4,31) und eine auf den Unterteil (3,34) aufgeschraubte Überwurfmutter (5) auf. Die Teile (3,4,31,34) sind jeweils von einer Bohrung (11, 12) durchsetzt und mit dem Kabel (2,34) verbindbar. Der Unterteil (3,34) ist mit einem Kontaktelement (7,33) elektrisch leitend verbunden und das Kontaktelement (7,33) weist mehrere radial nach innen gerichtete Kontaktfinger (8,36) auf, die sich beim Aufschieben auf das Kabel (2,34) elastisch an den Schirm (9) anlegen. Das Kontaktelement (7,33) ist wenigstens im Bereich der Kontaktfinger (8,36) federnd ausgebildet, so dass das Kabel (2,34) durch umlegen der Kontaktfinger (8,36) demontiert werden kann. Die Kabelverschraubung (1,30) kann mit oder ohne Kontaktelement (7,33) verwendet werden.

## Beschreibung

Die Erfindung betrifft eine Kabelverschraubung für ein abgeschirmtes Kabel, die wenigstens ein Unterteil, einen in diesem gelagerten Dichtteil und eine auf den Unterteil aufgeschraubte Überwurfmutter aufweist, welche Teile jeweils von einer Bohrung durchsetzt, wobei der Unterteil mit einem Kontaktelement elektrisch leitend verbunden ist und dieses Kontaktelement mehrere radial nach innen gerichtete Kontaktlamellen aufweist, die federnd an den Schirm anlegbar sind.

Aus der EP-A-098 995 ist eine Kabelverschraubung bekannt geworden, bei der ein Druckteil und ein Dichteinsatz eine Einheit bilden. Bei einer Montage wird das Schirmgeflecht um eine Stirnfläche des Druckteils herumgelegt. Beim Festschrauben der Überwurfmutter wird dieser Druckteil gegen eine konische Innenseite des Unterteils gespannt, so dass der umgelegte Teil des Schirmgeflechtes zwischen dem Druckteil und dem Unterteil festgeklemmt wird. Der Dichteinsatz ist in der Überwurfmutter angeordnet und mit zunehmender achsialer Spannung zwischen dem Unterteil und der Überwurfmutter wird der Querschnitt einer Bohrung des Dichteinsatzes verkleinert und dadurch das hindurchgeführte Kabel festgeklemmt und abgedichtet. In der Praxis hat sich diese Kabelverschraubung an sich vielfach bewährt. Das Montieren und insbesondere das Umlegen des Schirmgeflechtes um den Druckteil ist aber vergleichsweise zeitaufwendig.

Durch die EP-A-0 598 261 ist eine Kabelverschraubung bekannt geworden, bei welcher das Schirmgeflecht ebenfalls um einen Druckteil herumgelegt wird.

Durch die EP-A-1 526 620 ist eine Kabelverschraubung bekannt geworden, bei welcher der Schirmkontakt mit einem Kontaktelement hergestellt wird, das nach innen ragende elastische Kontaktbügel aufweist. Die Kontaktbügel sind an einem Haltering angebracht. In den Unterteil ist zudem ein Abstützelement eingesetzt, an dem Kontaktfinger des Kontaktelementes abgestützt sind. Mit diesem hülsenförmigen Abstützelement werden die Kontaktfinger beim Aufschrauben der Überwurfmutter gegen die Aussenseite des Schirmgeflechtes gespannt. Bei dieser Kabelverschraubung soll es möglich sein, dass sie für Kabel mit deutlich unterschiedlichen Durchmessern eingesetzt werden kann. Zudem soll es möglich sein, dass das Kabel bis zum Aufschrauben der Überwurfmutter frei achsial hin- und herbewegt sowie gedreht werden kann. Die Herstellung dieser Kabelverschraubung ist vergleichsweise aufwendig, da das genannte Abstützelement als weiteres Teil erforderlich ist.

Die EP-A-0 093 524 offenbart eine Kabelverschraubung, bei welcher ebenfalls ein Kontaktelement mit radial nach innen ragenden Kontaktfingern vorgesehen ist. Das Kontaktelement ist in eine Nut einer Hülse eingesetzt.

Die FR 2 768 270 offenbart eine Kabelverschraubung, bei welcher das Kontaktelement mit einer Hülse aus hartem Kunststoff im Unterteil fixiert wird. Zum Abdichten des Kabels ist in dieser Hülse ein Ring aus gummielastischem Material eingesetzt.

Der Erfindung liegt die Aufgabe zugrunde, eine Kabelverschraubung der genannten Art zu schaffen, die eine einfachere und insbesondere schnellere Montage ermöglicht und die trotzdem funktionssicher ist und kostengünstig hergestellt werden kann.

Die Aufgabe ist bei einer gattungsgemässen Kabelverschraubung dadurch gelöst, dass im Unterteil eine elektrisch leitende Hülse angeordnet ist, die bei angezogener Überwurfmutter das Kontaktelement gegen eine ringförmige Kontaktfläche auf der Innenseite des Unterteils spannt und dass die Kabelverschraubung wahlweise mit oder ohne Kontaktelement verwendbar ist, wobei bei der Verwendung mit dem Kontaktelement das anzuschliessende Kabel bei lose aufgeschraubter Überwurfmutter einschiebbar ist und bei der Verwendung ohne Kontaktelement der Schirm an einem umgelegten Ende zwischen der genannten Ringfläche und der elektrisch leitenden Hülse festklemmbar ist.

Eine besonders kostengünstige Herstellung ist dann möglich, wenn gemäss einer Weiterbildung der Erfindung das Kontaktelement ein Stanzteil ist. Aufgrund der genannten elastischen Auslenkbarkeit der Kontaktlamellen kann die Kabelverschraubung trotzdem einfach und sicher aufgeschoben werden.

Nach einer Weiterbildung der Erfindung besitzt das Kontaktelement an einem Umfang mehrere radial nach aussen ragende Flügel, die ebenfalls elastisch ausgebildet sind. Dies ermöglicht eine besonders einfache Montage.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: schematisch eine räumliche Teilansicht einer erfindungsgemässen Kabelverschraubung, wobei Teile aus darstellerischen Gründen auseinander-gezogen sind;
- Figur 2: einen Schnitt durch die erfindungsgemässe Kabelverschraubung, wobei die Überwurfmutter weggelassen ist;
- Figur 3: eine Ansicht der erfindungsgemässen Kabelverschraubung ist;
- Figur 4: eine weitere räumliche Ansicht der erfindungsgemässen Kabelverschraubung, wobei auch hier die Überwurfmutter weggelassen ist;
- Figur 5: einen Schnitt durch eine Kabelverschraubung nach einer Variante;
- Figur 6: eine räumliche Ansicht der Kabelverschraubung nach Fig. 5, wobei einzelne Teile auseinandergezogen sind;

- Figur 7: eine räumliche Ansicht eines geschnittenen Abschnitts der Kabelverschraubung nach Figur 6, wobei die Überwurfmutter weggelassen ist;
- Figur 8: einen Schnitt durch die Kabelverschraubung nach Fig. 5, wobei ein Kabel eingesetzt und teilweise zurückgezogen ist;
- Figur 9: einen Schnitt durch die Kabelverschraubung nach Fig. 5 mit kontaktiertem Kabel und;
- Figur 10: einen Schnitt durch die Kabelverschraubung nach Fig. 5, wobei das Kontaktelement jedoch nicht vorgesehen ist.

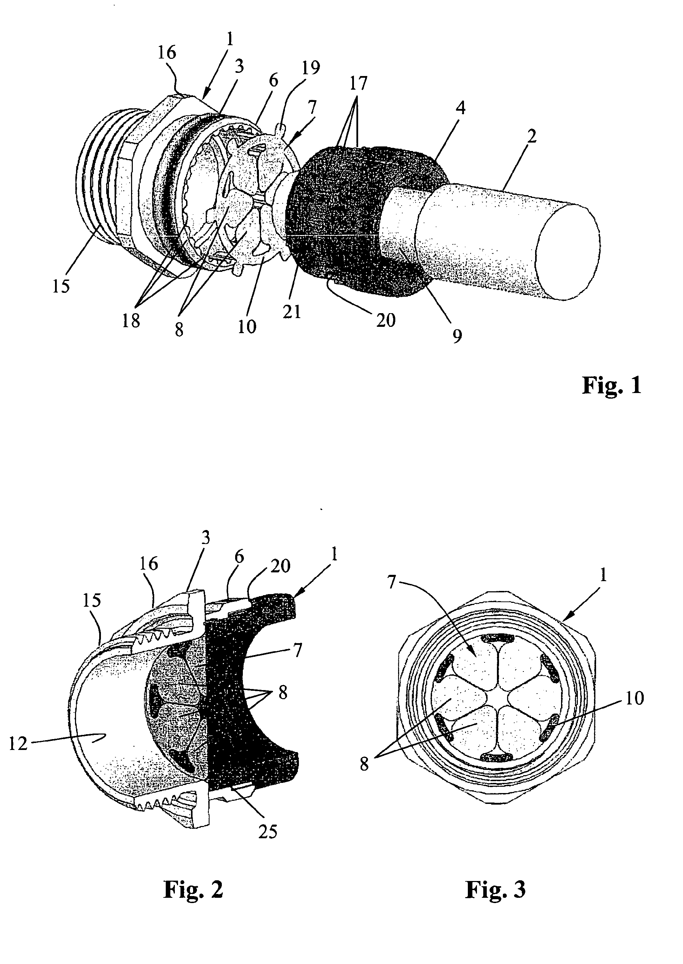

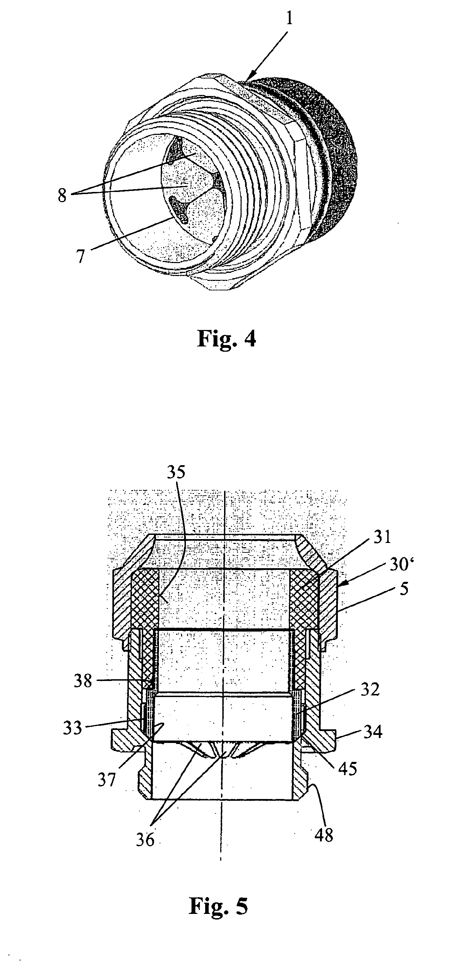

Die Figur 1 zeigt eine Kabelverschraubung 1, die einen hülsenförmigen Unterteil 3 aufweist, die beispielsweise aus Messing hergestellt ist. Sie besitzt eine Bohrung 12 zur Aufnahme eines Kabels 2. Aussenseitig ist ein Aussengewinde 15 angeordnet, mit dem der Unterteil 3, beispielsweise mit einem hier nicht gezeigten Gehäuse verschraubt werden kann. Zum Festziehen des Unterteils 3 besitzt dieses an der Aussenseite einen Sechskant 16. Zudem besitzt der Unterteil 3 ein weiteres Aussengewinde 6, auf das die in Figur 5 gezeigte Überwurfmutter 5 aufgeschraubt ist. Zudem besitzt der Unterteil 3 innenseitig eine konische Fläche 25, welche eine Schulter bildet, an welcher ein Kontaktelement 7 anliegt.

Das Kontaktelement 7 ist ein Stanzteil, der aus einem elektrisch leitenden Werkstoff hergestellt ist. Das Kontaktelement 7 ist insbesondere im Bereich von radial nach innen ragenden Kontaktfingern 8 hochelastisch ausgebildet. Diese hohe Flexibilität wird durch eine geringe Dicke von höchstens etwa 0,01 mm bis 0,05 mm erreicht.

Die Dicke ist abhängig von der Grösse der Kabelverschraubung 1. Bei einer Grösse von M 12 ist die Dicke vorzugsweise etwa 0,05 mm.

Die Kontaktfinger 8 sind an einem umlaufenden Ring 10 angebracht, an dem zugleich radial nach aussen ragende Flügel 19 angebracht sind. Wie ersichtlich liegen jeweils ein Kontaktfinger 8 und ein Flügel 19 radial auf der gleichen Linie. An der Soll-Knickstelle sind die Lamellen spitz. Auch dünne Stäbe sind einführbar.

Das Kontaktelement 7 ist im montierten Zustand gemäss Figur 2 mit einem Dichtteil 4 fixiert, der bis zu einer Schulter 20 in den Unterteil 3 eingesetzt ist. Die Flügel 19 sind umgebogen und liegen aussenseitig in der Nähe einer Stirnfläche 21 an diesem Dichtteil 4 an. Das Kontaktelement 7 ist im montierten Zustand zwischen einer Fläche 25 des Unterteils 3 und der Stirnfläche 21 des Dichtteils 4 festgeklemmt. Die Fläche 25 bildet eine Schulter und ist vorzugsweise konisch ausgebildet. Die Flügel 19 liegen im nicht montierten Zustand in der gleichen Ebene wie der Ring 10 und die Kontaktfinger 8. Beim Einsetzen in den Unterteil 3, wird das Kontaktelement 7 mit einer an sich bekannten Montagevorrichtung bis zur Fläche 25 eingeschoben, wobei die Flügel 19 durch dieses Einschieben umgebogen werden.

Der Dichtteil 4 ist aus gummielastischem Kunststoff hergestellt und bildet ein Dichtungsmittel, das im montierten Zustand an der Aussenseite des Kabels 2 angepresst ist. Am Umfang besitzt der Dichtteil 4 mehrere achsial verlaufende Rippen 17, die jeweils in eine Rille 18 an der Innenseite des Unterteils 3 eingeschoben werden. Dieser Eingriff zwischen den Rippen 17 und den Rillen 18 dient als Drehsicherung. Der Dichtteil 4 dient hier somit gleichzeitig als Dichtmittel als auch als Klemmmittel, mit dem das Kontaktelement 7 am Unterteil 3 festgeklemmt wird.

Die Kabelverschraubung 30 gemäss Figur 5 unterscheidet sich von der Kabelverschraubung 1 durch einen zylindrischen hülsenförmigen Druckteil 32, der aus elektrisch leitendem Werkstoff, beispielsweise aus einem geeigneten Metall hergestellt ist. Dieser Druckteil 32 greift in den Dichtteil 31 ein und liegt mit einer Schulter 38 an diesem an. Mit einer vorderen konischen Kontaktfläche 45 liegt dieser Druckteil 32 mit axialem Druck an einem Kontaktelement 33 an und presst dieses gegen eine ebenfalls konische Fläche 46 des Unterteils 3. Der Dichtteil 31 wird durch die Überwurfmutter 5 in axialer Richtung gegen den Druckteil 32 gespannt und damit fixiert.

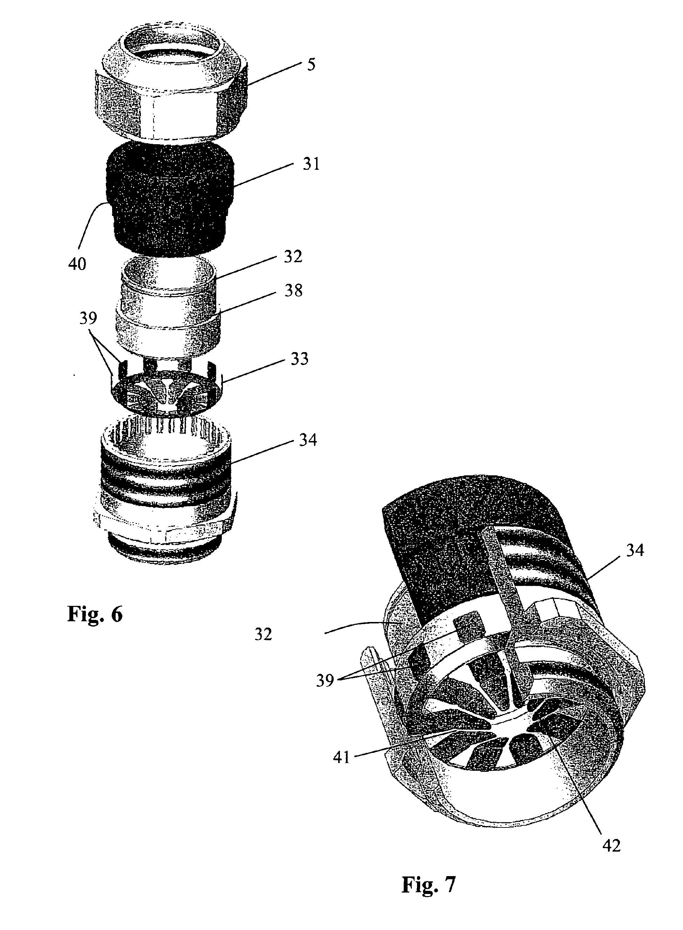

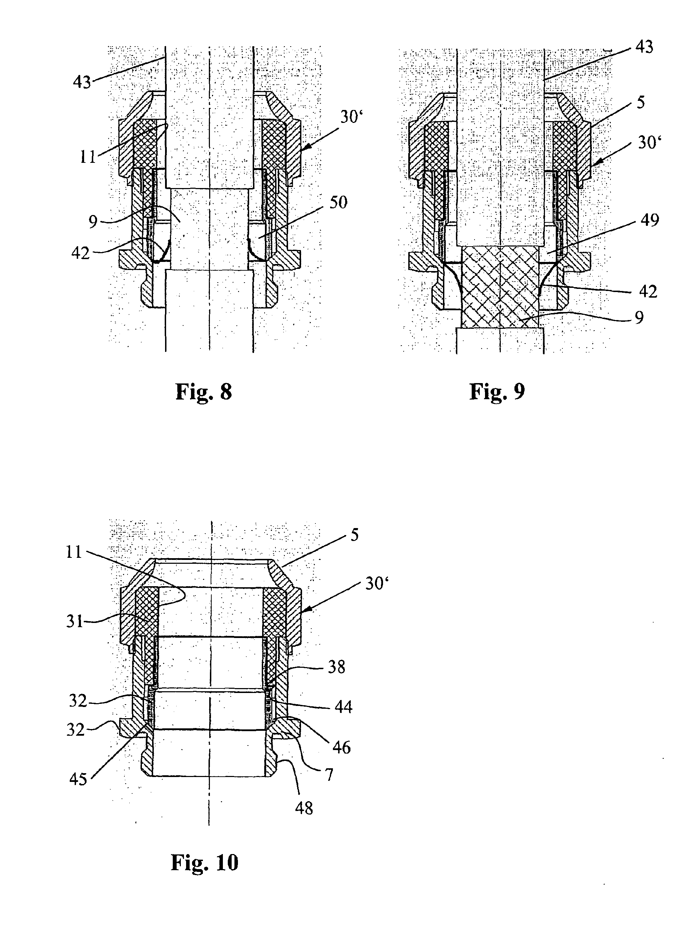

Das bei der Kabelverschraubung 30 gemäss Figur 5 vorgesehene Kontaktelement 33 unterscheidet sich vom Kontaktelement 7 vor allem durch die Form der Kontaktfinger 36. Wie insbesondere die Figuren 6 und 7 zeigen, weisen diese Kontaktfinger 36 jeweils eine abgewinkelte Spitze 42 auf, die an ihrem Grund mit Soll-Knickstellen 41 versehen sind. Diese Soll-Knickstellen 41 können jeweils durch eine etwas geringere Dicke oder Weite gebildet sein. Die Kontaktfinger 36 bestehen wie diejenigen des Kontaktelementes 7 aus einem vergleichsweise dünnen Blech, wobei diese Dicke vorzugsweise kleiner als 0.1 mm ist. Vorzugsweise liegt die Dicke in einem Bereich von etwa 0.05 mm bis 0.1 mm, vorzugsweise etwa 0.05 mm bis etwa 0.08 mm. Vorzugsweise beträt die Dicke etwa 0.05 mm. Diese geringe Dicke einerseits und die Soll-Knickstellen 41 ermöglichen eine Demontage, wie dies anhand der Figuren 8 und 9 näher erläutert wird. Die Soll-Knickstellen 41 sind hierbei jedoch nicht zwingend, erleichtern jedoch eine solche Demontage wesentlich.

Die Figur 9 zeigt die Kabelverschraubung 30 mit einem kontaktierten Kabel 43. Der Kabelmantel ist in einem Bereich 49 entfernt und in diesem Bereich ist das Schirmgeflecht 9 frei und wird durch die federnd anliegenden Kontaktfinger 36 elektrisch leitend mit der Kabelverschraubung 30 und über diese mit einem hier nicht gezeigten Gehäuse verbunden. Die Überwurfmutter 5 ist hier nicht angezogen und damit ist das Kabel 43 noch nicht festgelegt. Soll nun das Kabel 43 aus irgendeinem Grund demontiert werden, so kann es in die in Figur 8 gezeigte Position zurückgezogen werden. Aufgrund der genannten geringen Dicke und zusätzlich durch die genannten Sollknickstellen 41 können die Kontaktfinger 36 und insbesondere die Spitzen 42 gemäss Figur 8 ohne grossen Kraftaufwand umgelegt werden. Das Kabel 43 kann dann vollständig aus der Kabelverschraubung 30 herausgezogen werden. Die Kontaktfinger 36 und die Spitzen 42 können wie ersichtlich in einen ringförmigen Zwischenraum 50 ausweichen. Dieser Zwischenraum 50 wird durch eine Ausnehmung 37 an der Innenseite des Druckteils 32 erweitert. Die Kontaktfinger 36 können deshalb ohne bleibende Verformung gemäss Figur 8 umgelegt werden.

Ist das Kabel 43 vollständig aus der Kabelverschraubung 30 herausgezogen, so gehen die Kontaktfinger 36 wieder in die beispielsweise in Figur 7 gezeigte hohe Stellung zurück. Das Kabel 43 oder ein anderes Kabel kann nun wieder in die Kabelverschraubung 30 eingesetzt werden. Die Überwurfmutter wird dann festgezogen und durch die elastische Verformung des Dichtteils 31 wird das Kabel 43 in der vorgesehenen Position fixiert. Es ist hier sogar eine weitere Demontage möglich.

Die in Figur 10 gezeigte Kabelverschraubung 30' unterscheidet sich von der Kabelverschraubung 30 in konstruktiver Hinsicht dadurch, dass das Kontaktelement 33 hier nicht verwendet wird. Die Kabelverschraubung 30' ist zudem für eine andere Art von Montage vorgesehen. Die Kabelverschraubung 30 wird vor dem Einführen des Kabels 43 an dem nicht gezeigten Gehäuse montiert, wobei in bekannter Weise ein Kragen 34 am Gehäuse anliegt und ein Gewinde 48 an der Innenseite des Gehäuses eine hier nicht gezeigte Quermutter aufnimmt. Dies ermöglicht eine vergleichsweise schnelle Montage, wobei das Kabel gemäss Figur 9 kontaktiert wird. Das Schirmgeflecht 9 muss bei dieser Montage nicht durchschnitten und umgelegt werden, wie dies bei der Kabelverschraubung der oben genannten EP-A-098 995 vorgesehen ist.

Bei der Montage der Kabelverschraubung 30' ist nun eine Montage gemäss dieser europäischen Veröffentlichungsschrift möglich, wobei die Überwurfmutter 5, der Dichtteil 31 und der Druckteil 32 auf das Kabel aufgeschoben werden. Der Unterteil 34 ist jeweils separat und wird mit dem Gehäuse verschraubt. Das Schirmgeflecht 9 wird um die Stirnseite und somit um die Kontaktfläche 45 des Druckteils 32 herumgelegt. Das Kabel wird nun mit der Überwurfmutter 5, dem Dichtteil 31 und dem Druckteil 32 in den Unterteil 34 eingesetzt und die Überwurfmutter 5 wird festgezogen, bis das Kabel durch den an diesem anliegenden Dichtteil 31 fixiert ist. Beim Anziehen der Überwurfmutter 5 wird der Druckteil 32 gegen eine konische Fläche 46 an der Innenseite des Unterteils 34 gespannt. Diese axiale Spannung wird vom Dichtteil 31 über eine Stirnfläche 44 auf die Schulter 38 des Druckteils 32 übertragen. Wesentlich ist nun, dass der Dichtteil 31, der Druckteil 32 und die Flächen 45 und 46 so ausgebildet sind, dass das Schirmgeflecht 9 auch ohne Kontaktelement 33 kontaktiert werden kann. Die Kontaktfläche 45 kann somit ohne Zwischenraum an die konische Fläche 46 angelegt werden. Diese Flächen besitzen wie ersichtlich eine Neigung von etwa 45° zur Längsrichtung eines Durchgangs 35, welcher das Kabel 43 aufnimmt.

Die Kabelverschraubung 30 kann somit durch Entfernung des Kontaktelementes 33 in die Kabelverschraubung 30' umgewandelt werden, was wie erläutert die andere Montage ermöglicht. Dadurch ist insbesondere die Lagerhaltung vereinfacht. Für beide Montagearten muss somit lediglich noch die Kabelverschraubung 30 an Lager gehalten werden. Entsprechend ist am Montageort lediglich noch die Kabelverschraubung 30 erforderlich. Der Fachmann kann somit vor Ort entscheiden, welche Montage besser geeignet ist.

### Bezugszeichenliste

- 1: Kabelverschraubung
- 2: Kabel
- 3: Unterteil
- 4: Dichtteil
- 5: Überwurfmutter
- 6: Aussengewinde
- 7: Kontaktelement
- 8: Kontaktfinger
- 9: Schirmgeflecht
- 10: Ring
- 11: Bohrung
- 12: Bohrung
- 13: Kabelmantel
- 14: Pfeil
- 15: Aussengewinde
- 16: Sechskant
- 17: Rippen
- 18: Rillen
- 19: Flügel
- 20: Schulter
- 21: Stirnseite
- 25: Fläche
- 26: Stirnseite
- 27: Pfeil

- 30: Kabelverschraubung
- 31: Dichtteil
- 32: Druckteil
- 33: Kontaktelement
- 34: Unterteil
- 35: Durchgang
- 36: Kontaktfinger
- 37: Ausnehmung
- 38: Schulter
- 39: Flügel
- 40: Schulter
- 41: Soll-Knickstelle
- 42: Spitze.
- 43: Kabel
- 44: Stirnfläche
- 45: Kontaktfläche
- 46: Konische Fläche
- 47: Kragen
- 48: Gewinde
- 49: Bereich
- 50: Zwischenraum

## Patentansprüche

1. Kabelverschraubung für ein abgeschirmtes Kabel (2), die wenigstens ein Unterteil (3,34) einen in diesem gelagerten gummielastischen Dichtteil (4) und eine auf den Unterteil (3,34) aufgeschraubte Überwurfmutter (5) aufweist, welche Teile (3, 4) jeweils von einer Bohrung (11, 12) durchsetzt sind, die das Kabel (2) aufnehmen können, wobei der Unterteil (3) mit einem Kontaktelement (7,33) elektrisch leitend verbunden ist und das Kontaktelement (7,33) mehrere radial nach innen gerichtete Kontaktfinger (8) aufweist, die federnd an den Schirm (9) anlegbar sind, **dadurch gekennzeichnet, dass** im Unterteil eine elektrisch leitende Hülse angeordnet ist, die bei angezogener Überwurfmutter das Kontaktelement gegen eine ringförmige Kontaktfläche auf der Innenseite des Unterteils spannt und dass die Kabelverschraubung wahlweise mit oder ohne Kontaktelement verwendbar ist, wobei bei der Verwendung mit dem Kontaktelement das anzuschliessende Kabel bei lose aufgeschraubter Überwurfmutter einschiebbar ist und bei der Verwendung ohne Kontaktelement der Schirm an einem umgelegten Ende zwischen der genannten Ringfläche und der elektrisch leitenden Hülse festklemmbar ist.

2. Kabelverschraubung nach Anspruch 1, **dadurch gekennzeichnet, dass** das Kontaktelement (7,33) ein Stanzteil ist.

3. Kabelverschraubung nach Anspruch 1 oder 2, **dadurch gekennzeichnet, dass** das Kontaktelement (7) eine Dicke von kleiner als 0,1 mm, vorzugsweise kleiner als 0,5 mm und noch bevorzugter im Bereich von 0,05 mm bis 0,1 mm aufweist.

4. Kabelverschraubung nach einem der Ansprüche 1 bis 3, **dadurch gekennzeichnet, dass** das Kontaktelement (7,33) an einem Umfang (10) mehrere radial nach aussen ragende Flügel (19,39) aufweist, die im montierten Zustand den Dichtteil (4,31) umgreifen.

5. Kabelverschraubung nach einem der Ansprüche 1 bis 4, **dadurch gekennzeichnet, dass** das Kontaktelement (33) mit einem elektrisch leitenden Druckteil (32) gegen eine konische Fläche (46) des Unterteils (34) gespannt ist.

6. Kabelverschraubung nach Anspruch 5, **dadurch gekennzeichnet, dass** der Druckteil (32) mit dem gummielastischen Dichtteil (4,31) axial gegen das Kontaktelement (33) spannbar ist.
